# EUROPEAN PATENT SPECIFICATION

(11) **EP 2 193 857 B1**
(45) Date of publication and mention of the grant of the patent: **16.11.2011**
(21) Application number: 08425620.5
(22) Date of filing: 23.09.2008
(51) Int. Cl.: B21F 15/06, B23B 47/28, F16B 7/18, F16G 11/00, B21C 47/24

(54) **System for the connection of wire rods and the like, and related method**
System zum Verbinden von Drahtstäben und zugehöriges Verfahren
Système de raccordement des fils métalliques et méthode correspondante

(43) Date of publication of application: 09.06.2010
(73) Proprietor: CMT Costruzioni Meccaniche di Taglione Emilio & C. sas, 03023 Ceccano (FR) (IT)
(72) Inventor: Taglione, Emilio, 03023 Ceccano (FR) (IT)
(74) Representative: Leone, Mario

(56) References cited:
- EP-A1- 1 818 117
- DE-A1- 3 741 852
- JP-A- 58 050 344
- US-A- 5 876 157

## Description

The present invention is related to a connection system for wire rods, and for other similar products being substantially wire-shaped. As wire rod, a bar is understood made in metallic material and having a reduced transverse section, so as to be flexible and to be provided in windable coils or harnesses. A method of joining two wire rod ends by a threaded member is e.g. known from JP-A-58050344.

In particular, the steel wire rods are manufactured by hot rolling, but wire rods are provided also through different processes. Usually, metal wire rods have a diameter greater than 5 mm and a section that can be cylindrical, half-cylindrical or polygonal as well, e.g. square, hexagonal, octagonal.

Being a semi-finished product, the wire rod is sent to a finishing step by unwinding a coils through which the wire rod is provided. Usually, the wire rod, before reaching to the finishing machine, undergoes a straightening process providing the use of rolls flexing the wire rod according to a curve opposite to that of the harness.

When the coils run out, another subsequent harness is provided, the starting end thereof being to be reinserted into the finishing process. However, the interruption may cause inconveniences in the finishing process, which can be stopped or which can even introduce a discontinuity in the manufacturing process.

The technical problem underlying the present invention is to provide a connection system for wire rods allowing to obviate the drawback mentioned with reference to the state of the art.

Such a problem is solved by a system for the connection of wire rods as above specified, **characterised in that** it comprises:
- at least one gripper device apt to be fixed to a final section of the wire rod, comprising a channel substantially coaxial to said section, through which the wire rod end can be reached;
- a bushing apt to be introduced into said channel, comprising a guide for drilling and tapping devices to allow the working of said final end; and
- a joint, apt to carry out a screw connection with said end after the working of said drilling and tapping devices.

The main advantage of the connection system according to the present invention lies in allowing a fast working of the wire rod in a coil, and then allowing the connection between the final end of the coils and the starting end of the next coil, so as to prevent any discontinuity within the finishing process.

According to the same inventive concept, the above problem is solved by a connection method comprising the steps of:
- positioning a guide for drilling and tapping devices at the final end of a wire rod coil;
- carrying out a drilling and a subsequent tapping at the end of the wire rod, so as to obtain a tapped blind hole substantially coaxial to the corresponding final section;
- positioning a guide for coaxial drilling and tapping devices at a start end section of a further wire rod coil;
- carrying out a drilling and a subsequent tapping of the end of the wire rod, so as to obtain a further tapped blind hole substantially coaxial to the corresponding start section; and
- inserting a threaded joint between the final and the starting end, so as to connect the two coils.

The present invention will be hereinafter detailed according to a preferred embodiment thereof, provided to an exemplificative and non-limitative purpose with reference to the annexed drawings wherein:

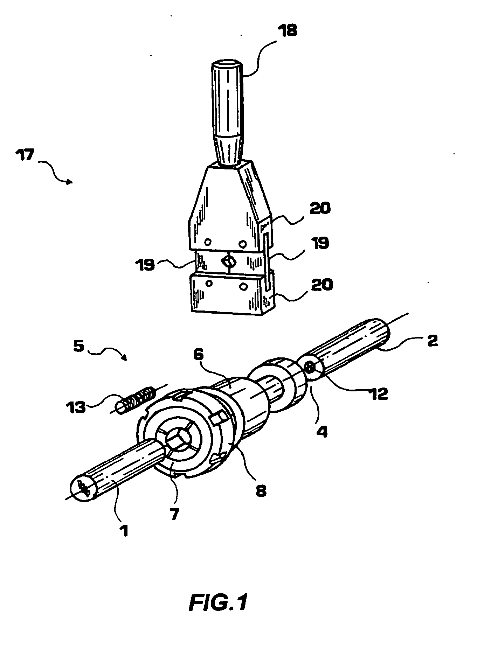

- Figure 1 shows a perspective view of a connection system for wire rods and the final and starting sections of two wire rod coils; and

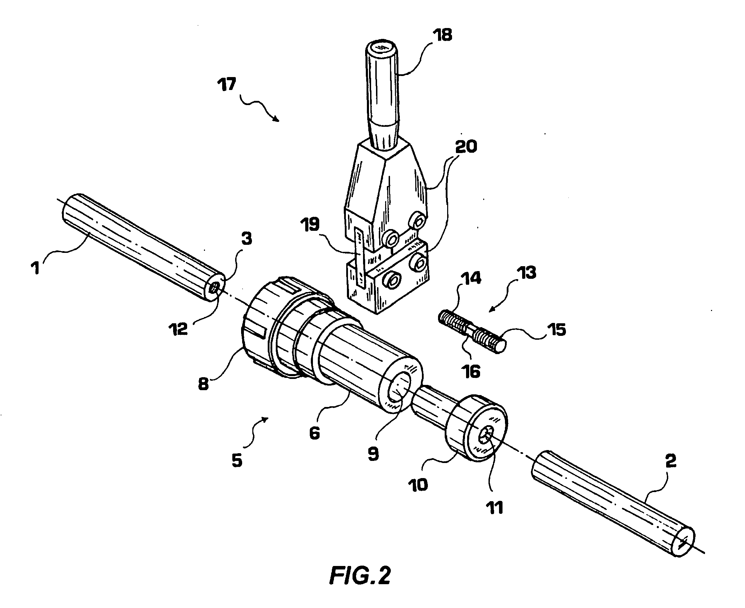

- Figure 2 shows a further perspective view of the system of the preceding figure, from a different point of view.

With reference to the drawings, a system for the connection of wire rods is schematically shown, wherein only the final section 1 and the starting section 2 of two coils are represented, the latter ones being not visible.

The coil of the final end section has been already sent to a straightening device, not shown, and to a following finishing process.

The section of the final end 2 instead belongs to a replacing coil, positioned in a wire rod supplying device, not shown as well.

The connection system is provided for connecting the terminal ends, respectively final 3 and starting 4, of said sections, i.e. the two terminal faces of the wire rods. The object of the connection system is to join said faces 3, 4 together, until they remain connected at a predetermined distance to allow the connection to be bent through the straightening process of the wire rod before the subsequent machining entry.

Such a system comprises a gripper device, which is indicated by 5 as a whole. It is substantially composed by a mandrel body 6 provided with a self-centring chuck 7, which can be driven by rotating the external rim 8 of the gripper.

Such a gripper device 5 is apt to be fixed to each of said final and starting sections 1,2. To this end, the gripper device 5 comprises, inside the mandrel body 6, a substantially coaxial channel 9. This channel 9 coaxially runs through the whole mandrel body 6, from the self-centring chuck 7, representing the inlet aperture of the channel 9, to the opposite portion where the outlet aperture is located.

Through the latter aperture, it is possible to reach the end of the wire rod section, which is inserted into the gripper device 5.

Through the latter aperture, the channel 9 is apt to operate as a guide for receiving a bushing 10, which, in turn, has a guide hole 11 coaxial to the bushing and then to the channel 9.

The guide hole 11 is hence provided to operate as a guide for a drilling device, e.g. a drilling machine, and for a tapping device, i.e. a screw-tap to obtain inside the so formed blind hole 12 an internal thread.

The screw-tap could be manually operated or it could be mounted on the drilling machine mandrel as well, previously used to obtain the blind hole 12.

It is understood that the above described system may comprise several mandrel bodies 6 and bushings 10 to have one of them corresponding to the diameter and to the kind of wire rod section. Similarly, also the drilling and tapping devices are appropriately selected according to the wire rod material.

Further, it is understood that the whole above described system may be automated, both for what concerning the blocking of the wire rod end section and for the automatic working of the tapped holes.

As a matter of fact, a specific station may be provided for the drilling and the tapping, which can be handled to drill, according to opposite directions, both the wire rod ends.

The system according to the invention then comprises a joint 13, which is provided to carry out a screw connection between the blind holes 12 formed into the final and starting end sections 1, 2, i.e. after the working of said drilling and tapping devices.

In the present embodiment, the joint 13 has two threaded opposed sections 14, 15, with thread opposed with respect to each other. The diameter and the thread of the joint 13 are adjusted to those carried out by the drilling and the tapping devices.

The two threaded sections 14, 15 are separated by a griping section 16, which, in the present embodiment, is undercut shaped. For instance, the griping section 16 is shaped as a hexagonal nut.

For the operation of the joint 13, the system comprises a wrench 17 having a handle 18. In the present embodiment, the wrench 17 is of the ring spanner kind, wherein the ring hole is formed between two half-plates 19 mounted between two plate bearing members 20, one of them connected to the handle 18.

The half-plates 19 have a minimal thickness, substantially corresponding to the width of the gripping section 16 of the joint 13, and they are mounted around the joint 13 when the threaded sections thereof have already been positioned at the blind holes 12 of the final and starting wire rod sections 1, 2. The thin thickness corresponds to the predetermined distance, which must be preserved between the faces 3, 4 of said sections 1, 2.

However, it is understood that the wrench 17 could be also a conventional fork wrench.

The joint 13 is made in a suitable material for the intended use thereof. In particular, the joint 13 should be provided so as to confer to the wire rod connection a flexibility not greater than that of a bulk wire rod section.

In this way, the wire rod, when it runs across the straightening device, is not exposed to the risk of being broken at the connection when the latter is bent.

With reference to the above described system, a connection method is now detailed, operated between the ends of two wire rod coils.

In this method, first the final end section 1 of an already wound wire rod coil is worked.

According to a first step of the method, a guide for coaxial drilling and tapping devices is positioned at the final end section of a wire rod coil.

In the present embodiment, this guide is represented by a guide hole 11 of the bushing 10, positioned by virtue of the gripper device 5.

The correct positioning of the guide is obtained through a self-centring chuck 7 and through a channel 9, coaxial to the gripper device.

Then, a subsequent step is provided wherein a drilling is carried out to obtain a blind hole 12, and a subsequent tapping to provide the blind hole with a thread at the wire rod end. The tapped blind hole 12, is hence substantially coaxial to the corresponding final section.

The same steps are repeated on the starting end section of a coil to be wound and to be connected to the already finished wire rod.

They can be operated on a bench wherein both the sections are placed of the final end and of the starting end of the wire rod to be connected, i.e. of the respective coils. Otherwise, the drilling may be the result of an automated process.

In this way, at the end of the wire rods intended to be faced to each other two identical holes are carried out, provided with the same thread.

Then, a step is provided wherein a threaded joint 13 is inserted between the final end 3 and the starting end 4, so as to connect the two coils.

Said ends 3, 4 are connected using the wrench 17, which is first mounted and then dismounted.

Said joint 13 is then eliminated in a subsequent step of the wire rod machining.

To the above described connection system and method a man skilled in the art, to achieve further and contingent needs, can introduce several additional changes and modifications, however all falling within the protection scope of the present invention, as defined by the annexed claims.

## Claims

1. System for the connection of wire rods, **characterised in that** it comprises:
• at least one gripper device (5) apt to be fixed to a final section (1, 2) of the wire rod, comprising a channel (9) substantially coaxial to said section (1, 2), through which the wire rod end (3, 4) can be reached;
• a bushing (10) apt to be introduced into said channel (9), comprising a guide for drilling and tapping devices to allow the working of said final end (2, 4); and
• a joint (13), apt to carry out a screw connection with said end (3, 4) after the working of said drilling and tapping devices.

2. Connection system according to claim 1, wherein the gripper device (5) is substantially composed by a mandrel body (6) provided with a self-centring chuck (7).

3. Connection system according to claim 2, wherein the channel (9) coaxially runs across the whole mandrel body (6).

4. Connection system according to claim 2, having several mandrel bodies (6) and bushings (9) to adjust them to the diameter and to the kind of wire rod section.

5. Connection system according to any of the preceding claims, wherein the joint (13) has two opposed threaded sections (14, 15), with an opposed thread with respect to each other.

6. Connection system according to claim 5, wherein said two threaded sections (14, 15) are separated by an undercut operated gripping section (16).

7. Connection system according to claim 5 or 6, comprising a wrench (17) of the ring spanner kind.

8. Connection system according to claim 7, wherein the hole of the ring spanner (17) is formed between two half-plates (19) which are mounted on half-plate bearing members (20), the half-plates (19) having a thickness corresponding to the predetermined distance to be preserved between the two connected ends (3, 4).

9. Connection system according to any of the preceding claims, wherein the joint (13) is made of a suitable material to confer to the wire rod connection a flexibility not greater than the flexibility of a bulk wire rod section.

10. Method for the connection of the ends of two wire rod coils, comprising the steps of:
• positioning a guide (11) for drilling and tapping devices at the final end section (1) of a wire rod coil;
• carrying out a drilling and a subsequent tapping at the end (3) of the wire rod, so as to obtain a tapped blind hole (12) substantially coaxial to the corresponding final section (1);
• positioning a guide (11) for coaxial drilling and tapping devices at a starting end section (2) of a further wire rod coil;
• carrying out a drilling and a subsequent tapping of the end (4) of the wire rod, so as to obtain a further tapped blind hole (12) substantially coaxial to the corresponding start section (2); and
• inserting a threaded joint (13) between the final and the starting ends (3, 4), so as to connect the two coils.

11. Connection method according to claim 10, wherein the correct positioning of the guide is obtained by virtue of a self-centring chuck and of a channel (9) coaxial with respect to the gripper device.

12. Connection method according to claim 10 or 11, wherein the ends (3, 4) of the wire rods are kept at a predetermined distance from said joint (13).

13. Connection method according to any claim from 10 and 12, wherein the faces of the ends (3, 4) of the end sections (1, 2) of the wire rods to be connected are provided with two identical blind holes (1), with opposed threads.

## Patentansprüche

1. System für das Verbinden von Drahtstäben, **dadurch gekennzeichnet, dass** das System umfasst:
- zumindest eine Greifervorrichtung (5) geeignet um an einen Finalbereich (1, 2) des Drahtstabes befestigt zu werden, umfassend einen Kanal (9), der im Wesentlichen koaxial zu dem genannten Bereich (1, 2) ist und durch den das Drahtstabende (3, 4) erreicht werden kann;
- eine Hülse (10) geeignet, um in den genannten Kanal (9) eingeführt zu werden, umfassend eine Führung für Bohr- und Gewindeschneide-Vorrichtungen, um das Bearbeiten des genannten Finalbereiches (2, 4) zu erlauben; und
- eine Verbindung (13), geeignet zum Ausführen einer Schraubverbindung mit dem Ende (3, 4) nach der Betätigung der Bohr- und Gewindeschneide-Vorrichtungen.

2. Verbindungssystem nach Anspruch 1, wobei die Greifervorrichtung (5) im Wesentlichen durch einen Dornkörper (6) der mit einem selbstzentrierenden Spannfutter (7) versehen ist, zusammengesetzt ist.

3. Verbindungssystem nach Anspruch 2, wobei der Kanal (9) koaxial über den gesamten Dornkörper (6) verläuft.

4. Verbindungssystem nach Anspruch 2, das mehrere Dornkörper (6) und Hülsen (9) aufweist, um diese an den Durchmesser und die Art des Drahtstabbereiches anzupassen.

5. Verbindungssystem nach einem der vorstehenden Ansprüche, wobei die Verbindung (13) zwei gegenläufig Gewindebereiche (14, 15), mit zueinander gegenläufigem Gewinde aufweist.

6. Verbindungssystem nach Anspruch 5, wobei die zwei Gewindebereiche (14, 15) durch einen Unterschnitt betätigten Greifbereich (16) getrennt sind.

7. Verbindungssystem nach einem der Ansprüche 5 oder 6, umfassend einen Schlüssel (17) des Schlüsselring-Typs.

8. Verbindungssystem nach Anspruch 7, wobei das Loch des Schlüsselrings (17) zwischen zwei Halbplatten (19) gebildet ist, die an Halbplatten-Lagerteilen (20) montiert sind, die Halbplatten (19) eine Dicke aufweisen, die dem vorbestimmten Abstand, der zwischen den zwei verbundenen Enden (3, 4) beibehalten werden soll, entspricht.

9. Verbindungssystem nach einem der vorstehenden Ansprüche, wobei die Verbindung (13) aus einem geeigneten Material hergestellt ist, um der Drahtstabverbindung eine Flexibilität zu verleihen, die nicht größer ist als die Flexibilität eines Hauptdrahtstabbereiches.

10. Verfahren für das Verbinden der Enden von zwei Drahtstab-Rollen, umfassend die Schritte des:
- Positionierens einer Führung (11) für Bohr- und Gewindeschneide-Vorrichtungen an dem finalen Endbereich (1) einer Drahtstab-Rolle;
- Durchführen einer Bohrung und eines anschließende Gewindeschneidens an dem Ende (3) des Drahtstabes, so dass ein Sackloch mit Innengewinde (12) erhalten wird, das im Wesentlichen koaxial zu dem entsprechenden Finalbereich (1) ist;
- Positionierens einer Führung (11) für koaxiale Bohr und Gewindeschneide-Vorrichtungen an einem Anfangsendbereich (2) eine weiteren Drahtstab-Rolle;
- Ausführens einer Bohrung und eines anschließenden Gewindeschneidens des Endes (4) des Drahtstabes, um ein weiteres Sackloch mit Innengewinde (12) im Wesentlichen koaxial zu dem entsprechenden Anfangsbereich (2) zu erhalten; und
- Einführens einer Gewinde-Verbindung (13) zwischen die Final- und Anfangsenden (3, 4), um die zwei Rollen zu verbinden.

11. Verbindungsverfahren nach Anspruch 10, wobei das korrekte Positionieren der Führung erhalten wird, durch ein selbstzentrierendes Spannfutter und einen Kanal (9), der koaxial bezüglich der Greifervorrichtung ist.

12. Verbindungsverfahren nach Anspruch 10 oder 11, wobei die Enden (3, 4) der Drahtstäbe in einem vorbestimmten Abstand von der Verbindung (13) gehalten sind.

13. Verbindungsverfahren nach einem der Anspruche 10 bis 12, wobei die Stirnseiten der Enden (3, 4) der Endbereiche (1, 2) der Drahtstäbe, die verbunden werden sollen, mit zwei identischen Sacklöchern (1) mit entgegen gesetzten Gewinden versehen sind.

## Revendications

1. Système pour le raccordement de fils machine, **caractérisé en ce qu'**il comprend :
au moins un dispositif de préhension (5) approprié pour être fixé à une section finale (1, 2) du fil machine, comprenant un canal (9) sensiblement coaxial par rapport à ladite section (1, 2), à travers lequel on peut atteindre l'extrémité (3, 4) du fil machine ;
une douille (10) appropriée pour être introduite dans ledit canal (9), comprenant un guide pour des dispositifs de perçage et de taraudage afin de permettre le travail de ladite extrémité finale (2, 4) ; et
un joint (13) approprié pour réaliser un raccordement de vis avec ladite extrémité (3, 4) après le travail desdits dispositifs de perçage et de taraudage.

2. Système de raccordement selon la revendication 1, dans lequel le dispositif de préhension (5) est sensiblement composé par un corps de mandrin (6) doté d'un mandrin de serrage concentrique (7).

3. Système de raccordement selon la revendication 2, dans lequel le canal (9) s'étend de manière coaxiale sur la totalité du corps de mandrin (6).

4. Système de raccordement selon la revendication 2, ayant plusieurs corps de mandrin (6) et douilles (9) pour les ajuster au diamètre et au type de la section de fil machine.

5. Système de raccordement selon l'une quelconque des revendications précédentes, dans lequel le joint (13) a deux sections filetées opposées (14, 15), avec un filetage opposé l'une par rapport à l'autre.

6. Système de raccordement selon la revendication 5, dans lequel lesdites deux sections filetées (14, 15) sont séparées par une section de préhension (16) réalisée en contre-dépouille.

7. Système de raccordement selon la revendication 5 ou 6, comprenant une clé (17) du type clé polygonale.

8. Système de raccordement selon la revendication 7, dans lequel le trou de la clé polygonale (17) est formé entre deux demi-plaques (19) qui sont montées sur des éléments de support de demi-plaque (20), les demi-plaques (19) ayant une épaisseur correspondant à la distance prédéterminée à conserver entre les deux extrémités raccordées (3, 4).

9. Système de raccordement selon l'une quelconque des revendications précédentes, dans lequel le joint (13) est réalisé avec un matériau approprié pour conférer au raccordement de fil machine une souplesse non supérieure à la souplesse de la majeure partie de la section de fil machine.

10. Procédé pour le raccordement des extrémités de deux bobines de fil machine, comprenant les étapes consistant à _{:}
positionner un guide (11) pour des dispositifs de perçage et de taraudage au niveau de la section d'extrémité finale (1) d'une bobine de fil machine ;
réaliser un perçage et un taraudage ultérieur au niveau de l'extrémité (3) du fil machine afin d'obtenir un trou borgne taraudé (12) sensiblement coaxial à la section finale (1) correspondante ;
positionner un guide (11) pour des dispositifs de perçage et de taraudage coaxiaux au niveau d'une section d'extrémité de départ (2) d'une autre bobine de fil machine ;
réaliser un perçage et un taraudage ultérieur de l'extrémité (4) du fil machine, afin d'obtenir un autre trou borgne taraudé (12) sensiblement coaxial à la section de départ (2) correspondante ; et
insérer un joint fileté (13) entre les extrémités finales et de départ (3, 4) afin de raccorder les deux bobines.

11. Procédé de raccordement selon la revendication 10, dans lequel le positionnement correct du guide est obtenu en vertu du mandrin d'auto-centrage et d'un canal (9) coaxial par rapport au dispositif de préhension.

12. Procédé de raccordement selon la revendication 10 ou 11, dans lequel les extrémités (3, 4) des fils machine sont maintenues à une distance prédéterminée dudit joint (13).

13. Procédé de raccordement selon l'une quelconque des revendications 10 et 12, dans lequel les faces des extrémités (3, 4) des sections d'extrémité (1, 2) des fils machine à raccorder sont prévues avec deux trous borgnes identiques (1), avec des filetages opposés.
